# EUROPEAN PATENT APPLICATION

(11) **EP 4 239 222 A1**
(43) Date of publication of application: **06.09.2023**
(21) Application number: 21891173.3
(22) Date of filing: 11.11.2021
(51) Int. Cl.: F16H 57/023

(54) **TRANSMISSION SYSTEM FOR AVIATION POWER**

(30) Priority: 13.11.2020 CN 202011265391
(71) Applicant: Chongqing Zongshen Aero Engine MFG Co., Ltd., Chongqing 400054 (CN)
(72) Inventor: HUANG, You, Chongqing 400054 (CN); XIONG, Yinchao, Chongqing 400054 (CN); ZHAI, Shaobing, Chongqing 400054 (CN)
(74) Representative: Bayramoglu et al.
(86) International application number: PCT/CN2021/130016
(87) International publication number: WO 2022/100653

(57) **Abstract**

A transmission system for an aircraft powerplant includes a transmission shaft (1), where an input end of the transmission shaft is sleeved with a driven gear (2), one end of the driven gear is axially limited, and the other end of the transmission shaft is configured to connect a rotating member; an end of the driven gear is in transmission connection with a stop hub (5), the stop hub is in transmission connection with an overload clutch (6), the overload clutch is in transmission connection with the transmission shaft, an end of the overload clutch away from the stop hub abuts against one end of a disc spring member (7), the other end of the disc spring member is axially limited, and a force value of the overload clutch is a fixed value; and an end face of the driven gear facing the stop hub is provided with a protruding claw A, an end of the stop hub is provided with a protruding claw B matching the protruding claw A, and the stop hub and the driven gear are in transmission through the matching between the protruding claws. The transmission system for an aircraft powerplant can further protect the transmission shaft, avoid the risk of fracture of the transmission shaft, and also protect other parts of the transmission system.

## Description

### TECHNICAL FIELD

The present disclosure relates to a power transmission system, and in particular, to a transmission system for an aircraft powerplant.

### BACKGROUND

An aircraft powerplant includes power systems of helicopters, unmanned aerial vehicles, or various aircrafts. Power is transmitted from a main transmission shaft (crankshaft) to a driving gear, then the driving gear drives a driven gear to rotate, and finally the rotation of the driven gear is transmitted to a rotating member (a propeller shaft, a driving flange, etc.) by a transmission shaft. On existing driven teeth, a clutch is often mounted on the rotating member, and the clutch is connected to the rotating member by a spline. When the rotating member is subjected to an external force that exceeds what the member can bear during power transmission, the clutch and the rotating member are temporarily separated from a rotating direction, that is, the clutch and a rotating shaft slip, so as to prevent rotating components (including the rotating shaft, a driving shaft, etc.) from being damaged by impact. In order to prevent the rotating shaft from being damaged, a clutch slip torsional moment needs to be designed reasonably. In this way, however, the torque that can be transmitted by such a transmission system is limited, and the scope of application cannot be effectively expanded, resulting in poor economy. In addition, an overload clutch of a transmission system in the prior art has no special lubricating oil passage, and the overload clutch can only be lubricated by oil mist, such that the lubrication effect is poor, and the reliability of the overload clutch is limited.

Chinese patent CN204692539U discloses a buffer structure for an engine transmission system. The buffer structure includes a transmission shaft and driven teeth and further includes an elastic member and a stop hub. The transmission shaft is sequentially sleeved with the elastic member, the stop hub, and the driven teeth; a driven gear is in clearance fit with the transmission shaft, the stop hub is circumferentially fixed to the transmission shaft, the elastic member is in clearance fit with the transmission shaft, and the stop hub is in curved surface contact with the driven teeth.

In the above patent, the transmission torque is limited, and a protruding claw is subjected to a large impact load, which makes a contact force on the protruding claw too large and causes wear, and also makes a tensile force of a shaft too large and easily results in damage.

### SUMMARY

An objective of the present disclosure is to provide a transmission system for an aircraft powerplant, which has high safety performance and can transmit greater torque.

To achieve the above objective, the present disclosure is arranged as follows: A transmission system for an aircraft powerplant includes a transmission shaft, where an input end of the transmission shaft is sleeved with a driven gear, one end of the driven gear is axially limited, and the other end of the transmission shaft is configured to connect a rotating member; an end of the driven gear is in transmission connection with a stop hub, the stop hub is in transmission connection with an overload clutch, the overload clutch is in transmission connection with the transmission shaft, an end of the overload clutch away from the stop hub abuts against one end of a disc spring member, the other end of the disc spring member is axially limited, and a force value of the overload clutch is a fixed value; and an end face of the driven gear facing the stop hub is provided with a protruding claw A, an end of the stop hub is provided with a protruding claw B matching the protruding claw A, and the stop hub and the driven gear are in transmission through the matching between the protruding claws. The power transmission system using the above method can further protect the transmission shaft, avoid the risk of fracture of the transmission shaft, and also protect other parts of the transmission system. In addition, the system increases the travel during movements, and a disc spring can store potential energy and have long travel, which can improve vibration reduction performance. A semi-ring part is strengthened, which can bear a large axial force, and the torque that can be transmitted is increased. In addition, the rotation speed fluctuation and torque fluctuation can be buffered by an angle change of the protruding claw and cooperative adjustment of a force value of the disc spring.

To further reduce contact stress of the protruding claw and improve reliability, the protruding claw A and the protruding claw B are provided with a same number of claw teeth, the claw teeth of the protruding claw A and the claw teeth of the protruding claw B match each other, and the protruding claw A and the protruding claw B each have 3-10 claw teeth.

To further improve contact reliability, the claw teeth of the protruding claw A or the claw teeth of the protruding claw B each have inclined planes and a top surface, a bottom surface is provided between adjacent claw teeth, the inclined plane is a spiral section, a fillet is provided between the inclined plane and the top surface, and a fillet is provided between the inclined plane and the bottom surface.

Preferably, the spiral section has a helix angle of 25°-65°.

To further improve the contact reliability, each claw tooth of the protruding claw A has a height greater than that of the claw tooth of the protruding claw B.

Preferably, a height difference between the claw teeth of the protruding claw A and the claw teeth of the protruding claw B is 0.1-3 mm.

To further ensure the contact reliability, a corresponding central angle between adjacent claw teeth of the protruding claw A is greater than a central angle corresponding to the claw tooth of the protruding claw B, and a central angle between adjacent claw teeth of the protruding claw B is greater than a central angle corresponding to the claw tooth of the protruding claw A.

To further ensure the contact reliability, the top surface and the inclined planes of each claw tooth of the protruding claw A and/or the protruding claw B and the bottom surface between adjacent claw teeth each have a drum-shaped size of 0.02-0.1 mm.

To further prevent axial displacement of the driven gear, a shaft sleeve is arranged on the transmission shaft at an end of the driven gear, the shaft sleeve axially limits the driven gear, and a needle bearing is arranged between an end face of the driven gear and an end face of the shaft sleeve.

Preferably, an end of the stop hub is provided with a flange, the protruding claw B is arranged on the flange, a spline is arranged on an outer peripheral wall of the stop hub, a friction plate of the overload clutch is in spline fit with the stop hub, an inner ring of a front end housing of the overload clutch is provided with an internal spline, and the inner ring of the front end housing is splined with the transmission shaft.

Further, a disc spring seat of the disc spring member is arranged on the transmission shaft at a front end of the overload clutch, and a disc spring is arranged in the disc spring seat; one end of the disc spring abuts against the overload clutch, and the other end thereof abuts against an inner end face of the disc spring seat.

To further protect a rotating shaft from damage, a shaft shoulder is arranged on the transmission shaft, an isolating ring is arranged at the shaft shoulder, and the isolating ring axially limits the disc spring seat of the disc spring member; and the isolating ring is in cambered surface contact with the shaft shoulder. In the case of use of the isolating ring, the isolating ring tends to become larger due to an oblique force when subjected to a maximum axial force that exceeds what the system can bear. When the maximum axial force exceeds the force that the isolating ring can bear, the isolating ring is damaged to protect the rotating shaft from damage.

Preferably, a bearing for supporting a case is arranged between the isolating ring and the disc spring seat of the disc spring member.

Preferably, a bushing is arranged between the bearing and the disc spring seat of the disc spring member.

To further improve the lubrication effect, the transmission shaft is a hollow shaft, an inner shaft is arranged in the transmission shaft, an oil chamber is formed between the inner shaft and the transmission shaft, the transmission shaft is provided with a lubricating oil hole communicating with the oil chamber, and the lubricating oil hole is configured to convey lubricating oil to the stop hub, the driven gear and the overload clutch.

Beneficial effects:
Firstly, by using the transmission system for an aircraft powerplant according to the present disclosure, the driving gear transmits power to the driven gear, the driven gear and the transmission shaft do not directly transmit power, but transmit power to the stop hub by a protruding claw mechanism, the stop hub transmits power to the overload clutch, and the overload clutch is connected to the transmission shaft by a spline and transmits power to the transmission shaft by a spline. During the transmission, the overload clutch protects the transmission shaft, the driving gear and other related parts, so as to prevent an excessive reaction force returned by the transmission of the transmission shaft from damaging the parts in the entire path. The protruding claw mechanism cooperates with the disc spring to achieve the objective of vibration reduction, and the vibration reduction is achieved by the rotation speed unevenness and torque unevenness caused by the transmission of the driving gear through the cooperation of the protruding claw and a reaction force of the disc spring. When the torque increases, the protruding claw mechanism moves backward to compress a disc spring group, and the disc spring group stores potential energy, and releases the potential energy when the torque decreases, so as to adjust the torque fluctuation. When the rotation speed fluctuates, the same effect and principle are achieved.
Secondly, the driven gear transmits rotation torque to the stop hub by the protruding claw mechanism, and the stop hub is connected to an internal spline of the overload clutch by a spline. A slip force value of the internal spline is adjusted (a friction coefficient is fixed) by the magnitude of a pressing force of the disc spring (small disc spring inside the overload clutch), and the overload clutch is connected to the transmission shaft by the spline. When resistance of the transmission shaft is greater than slip torque of the overload clutch, the clutch slides to disconnect the stop hub of an output shaft to temporarily interrupt the power, so as to achieving the purpose of protecting the driving shaft and other weak parts.
Thirdly, the transmission system in the present disclosure can be compatible with the transmission power of 50 to 200 horsepower and can bear a maximum torque input of 500 N.m.
Fourthly, through the design of the isolating ring, not only can the disc spring seat be limited, but also a function of impact protection can be achieved.
Fifthly, through the design of the oil chamber and the design of the lubricating oil hole, the clutch, the stop hub and the spline can undergo forced lubrication, and the clutch has higher reliability and longer service life through the forced lubrication of an oil passage.

### BRIEF DESCRIPTION OF THE DRAWINGS

FIG. 1 is a front view of a transmission system for an aircraft powerplant in an embodiment;
FIG. 2 is a sectional view taken along line A-A of FIG. 1;
FIG. 3 is a cross-sectional view taken along line A-A of FIG. 1 (including no transmission case);
FIG. 4 is a diagram showing the cooperation between a stop hub and a driven gear;
FIG. 5 is an axonometric view of a driven gear; and
FIG. 6 is an axonometric view of a stop hub.

Description of reference numerals: 1 Transmission shaft; 2 Driven gear, 21 Protruding claw A, 3 Shaft sleeve, 4 Needle bearing, 5 Stop hub, 51 Protruding claw B, 52 Oil passage, 53 Stop hub shaft sleeve, 54 Spline, 59 Flange, 6 Overload clutch, 61 Friction plate, 62 Small disc spring member, 63 T-shaped front end housing, 7 Disc spring member, 71 Disc spring seat, 72 Disc spring, 8 Bushing, 9 Ball bearing, 10 Isolating ring, 11 Transmission case, 12 Inner shaft, 13 Oil chamber, 14 Oil seal, 15 Oil inlet hole, 16 Lubricating oil hole, 22/55 Inclined plane, 23/56 Top surface, 24/57 Bottom surface and 25/58 Fillet.

### DETAILED DESCRIPTION OF THE EMBODIMENTS

Specific implementations of the present disclosure will be further described in detail below with reference to the accompanying drawings, but the present disclosure is not limited to these implementations, and any improvement or substitution based on the basic spirit of the embodiments still falls within the scope of the claims of the present disclosure.

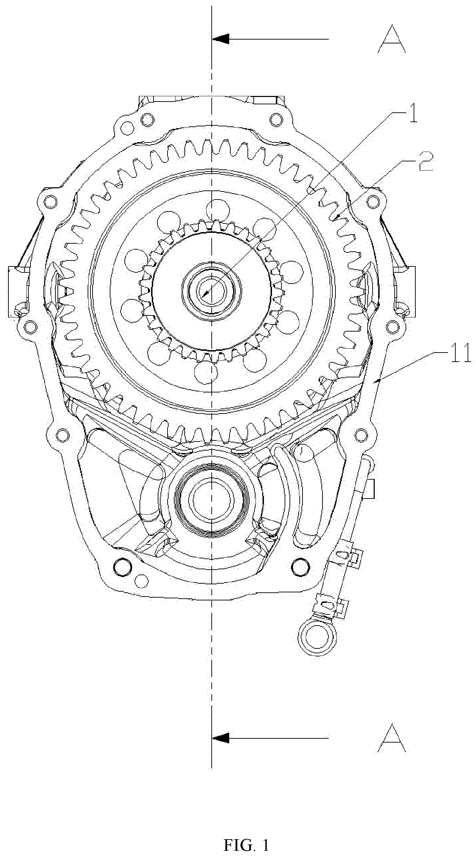

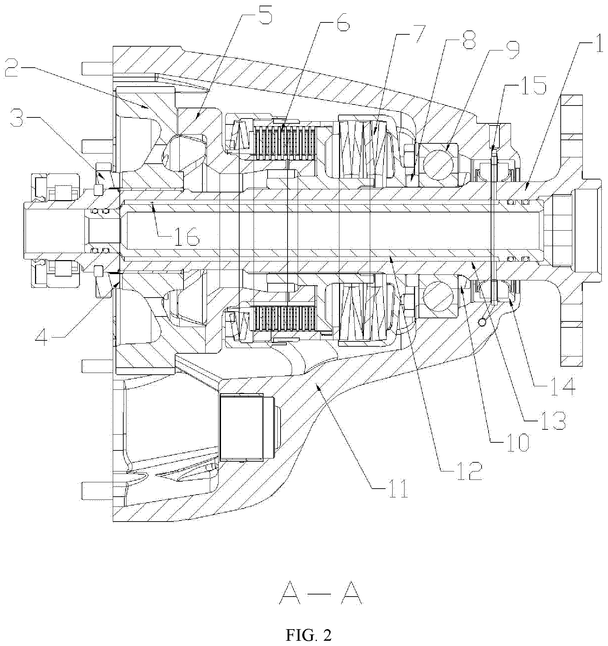

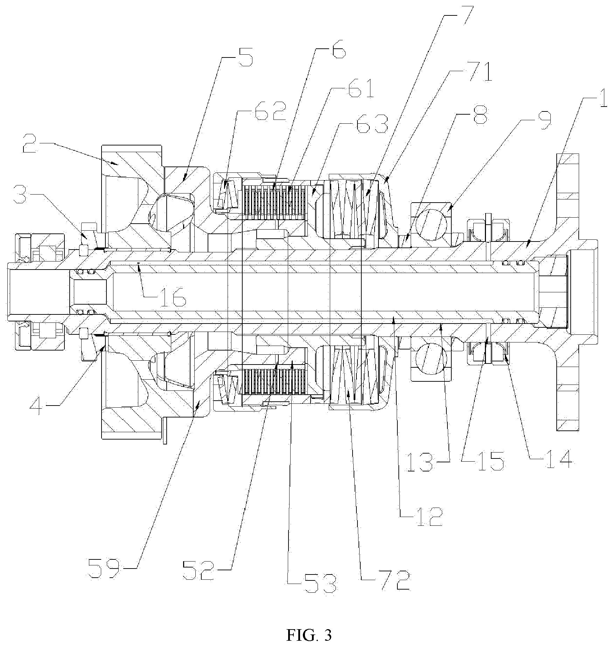

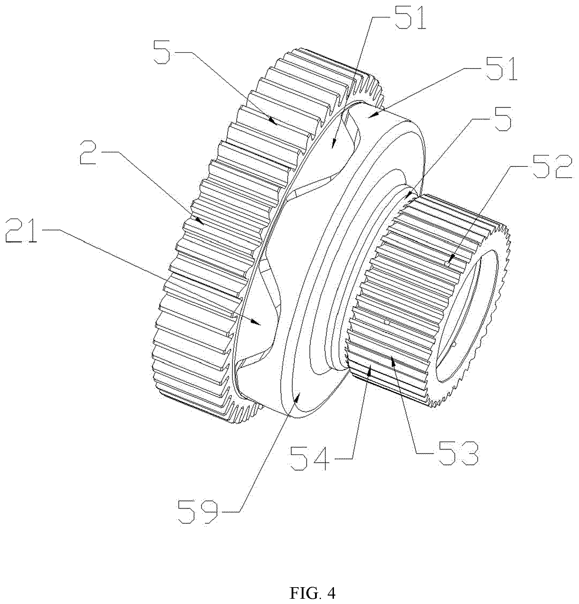

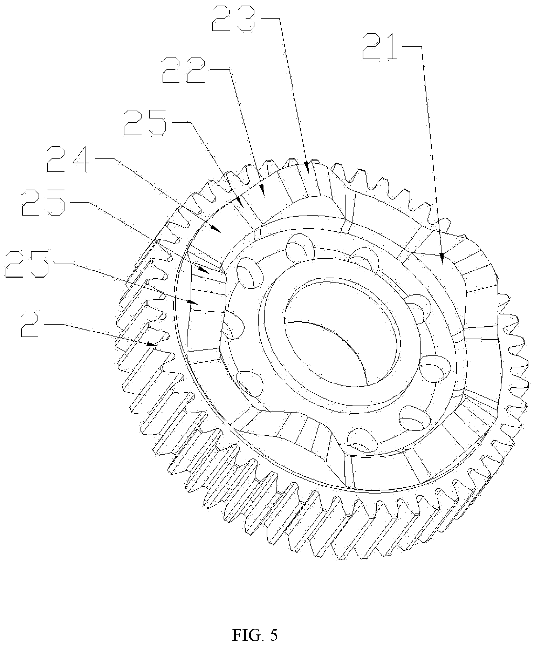

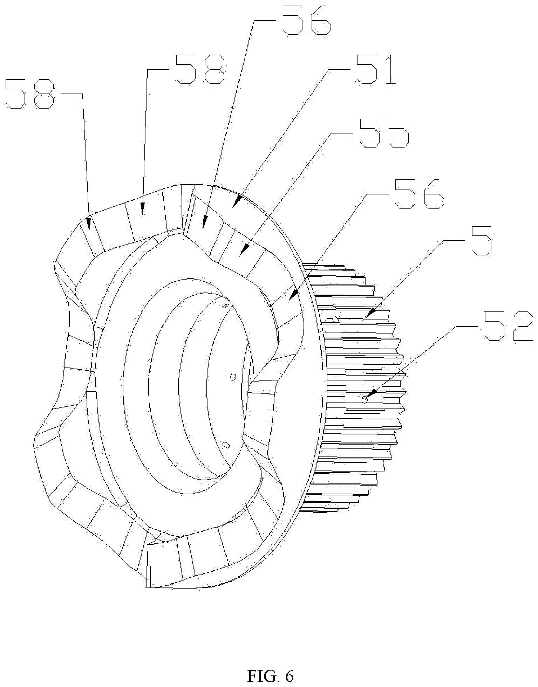

Embodiment: As shown in FIG. 1 to FIG. 6, this embodiment provides a transmission system for an aircraft powerplant, e.g., an aircraft such as an unmanned aerial vehicle and a helicopter. The transmission system includes transmission shaft 1. An input end of the transmission shaft is sleeved with a driven gear, one end of the driven gear 2 is axially limited, and the other end of the transmission shaft is configured to connect a rotating member. The rotating member is generally a propeller.

In this embodiment, an end of the driven gear that faces away from the propeller is limited by shaft sleeve 3, and needle bearing 4 is arranged between an end face of the shaft sleeve and an end face of the driven gear. The driven gear is in meshing transmission with a driving gear in a transmission case, the driving gear is connected to a power output shaft of an aero engine, and the engine transmits power to the driving gear and then to the driven gear.

An end of the driven gear is in transmission connection with stop hub 5, the stop hub is in transmission connection with an overload clutch, the overload clutch 6 is in transmission connection with the transmission shaft, an end of the overload clutch away from the stop hub abuts against one end of disc spring member 7, and the other end of the disc spring member is axially limited. A protruding claw structure is arranged between the end face of the driven gear and an end face of the stop hub, an end face of the driven gear is provided with protruding claw A 21, an end of the stop hub is provided with protruding claw B 22 matching the protruding claw A, and the stop hub and the driven gear are in transmission through the matching between the protruding claws. Spline 54 is arranged on an outer peripheral wall of a shaft sleeve of the stop hub, and friction plate 61 of the overload clutch is in spline fit with an outer peripheral wall of the stop hub. Small disc spring member 62 is arranged on a side of the friction plate of the overload clutch, the small disc spring member is arranged in a shell of the overload clutch, and a pressure released by the compression of the small disc spring member can compress the friction plate, such that a slip force value of the overload clutch can be adjusted. T-shaped front end housing 63 is provided at a front end of the overload clutch, an inner ring of the front end housing is provided with an internal spline, and the inner ring of the housing is in transmission with the transmission shaft by spline fit. An end face of the housing of the overload clutch abuts against the disc spring member. The disc spring member includes disc spring seat 71, and the transmission shaft is sleeved with the disc spring seat. Disc spring 72 is arranged in the disc spring seat, one end of the disc spring abuts against an inner end wall of the disc spring seat, and the other end thereof abuts against an end face of the overload clutch. The number of the disc springs is selected based on transmission power, engine power, etc. of the transmission system. In this embodiment, four disc springs are provided.

In a preferred implementation in this embodiment, a shaft shoulder is arranged on the transmission shaft, isolating ring 10 is arranged at the shaft shoulder, and the isolating ring is in cambered surface contact with the shaft shoulder. The isolating ring is made of low carbon steel.

In this embodiment, ball bearing 9 is arranged between the isolating ring and the disc spring seat, and transmission case 11 of the transmission system is mounted outside the bearing. Bushing 8 is further arranged between the bearing and a mounting base.

The force value of the overload clutch in this embodiment is fixed, and is determined by an amount of compression of the friction plate by the small disc spring member arranged inside the overload clutch. The slip force value of the overload clutch designed in this embodiment is twice the rated design torque.

There is a limit distance L between the end face of the T-shaped outer end housing 63 of the overload clutch and the inner end face of the disc spring seat, and the limit distance L has a length less than a maximum axial moving length of the protruding claw structure, such that the failure of overload protection caused by idling resulting from the separation of the stop hub from the driven gear can be avoided.

In addition, in another implementation in this embodiment, the protruding claw A 21 and a protruding claw B 51 are provided with a same number of claw teeth, the claw teeth of the protruding claw A 21 and the claw teeth of the protruding claw B 51 match each other, and the protruding claw A and the protruding claw B each have 3-10 claw teeth. The number of the claw teeth may be selected but is not limited to 3, 4, 5, 6, 7, 8, 9 or 10.

In addition, the claw teeth of the protruding claw A and the claw teeth of the protruding claw B each have inclined plane 22/55 and top surface 23/56, bottom surface 24/57 is provided between adjacent claw teeth, the inclined plane is a spiral section, fillet 25/58 is provided between the inclined plane and the top surface, and fillet 25/58 is provided between the inclined plane and the bottom surface. The bottom surface may be a flat surface, or the bottom surface may be a hollows formed by two adjacent spiral sections. The top surface may be a flat surface, or the top surface may be a hollows formed by two adjacent spiral sections.

Preferably, the spiral section has a helix angle of 25°-65°. Helix angles of inclined planes on two sides of each of the claw teeth may be the same or different, and may be selected but are not limited to 25°, 30°, 35°, 40°, 45°, 50°, 55°, 60° or 65°. Each inclined plane of the claw teeth of the protruding claw A and a matching inclined plane of the claw tooth of the claw B have the same helix angle. Each claw tooth of the protruding claw A has a height different from that of the claw tooth of the protruding claw B.

In this embodiment, the protruding claw A and the protruding claw B each have five claw teeth. Helix angles of two inclined planes of each claw tooth of the protruding claw A are the same, the top surface of the claw tooth of the protruding claw A is a flat surface, a bottom surface between two inclined planes is a flat surface, a fillet is provided between the top surface and the inclined plane, and a fillet is provided between the inclined plane and the bottom surface. Helix angles of two inclined planes of each claw tooth of the protruding claw B are the same, and each inclined plane of the claw tooth of the protruding claw B has a helix angle the same with that of a matching claw tooth of the protruding claw A. A bottom surface between two adjacent claw teeth of the protruding claw B is a flat surface, the top surface of each claw tooth is a flat surface, a fillet is provided between the top surface and the inclined plane, and a fillet is provided between the inclined plane and the bottom surface. In addition, a height difference between the claw teeth of the protruding claw B and the claw teeth of the protruding claw A is 0.1-3 mm, and may be selected, but is not limited to 0.1 mm, 0.2 mm, 0.5 mm, 1 mm, 1.5 mm, 2 mm, 2.5 mm, and 3 mm. In this embodiment, each claw tooth of the protruding claw A has a height 0.5 mm greater than that of the claw tooth of the protruding claw B.

In addition, a corresponding central angle between adjacent claw teeth of the protruding claw A is greater than a central angle corresponding to the claw tooth of the protruding claw B, and a corresponding central angle between adjacent claw teeth of the protruding claw B is greater than a central angle corresponding to the claw tooth of the protruding claw A. That is, each claw tooth of the protruding claw A is located between two claw teeth of the protruding claw B, each claw tooth of the protruding claw B is located between two adjacent claw teeth of the protruding claw A, and there is a gap between the claw teeth of the protruding claw A and the claw teeth of the protruding claw B, such that the protruding claws can rotate without being stuck.

In another implementation in this embodiment, the top surface and the inclined planes of each claw tooth of the protruding claw A and the protruding claw B and the bottom surface between adjacent claw teeth each have a drum-shaped size of 0.02-0.1 mm, which may be selected but is not limited to 0.02 mm, 0.03 mm, 0.05 mm, 0.08 mm, and 0.1 mm. In this embodiment, the set drum-shaped size is 0.05 mm. Through the design of the drum-shaped size, the surfaces of the claw teeth of the protruding claw A and the protruding claw B can be well attached to achieve a better transmission effect.

In addition, in this embodiment, the stop hub includes stop hub shaft sleeve 53, an end of the shaft sleeve is provided with flange 59, and an end face of the flange is provided with the protruding claw B. The transmission shaft is sleeved with the shaft sleeve of the stop hub, spline 54 is arranged on an outer peripheral wall of the shaft sleeve, an outer peripheral wall of the stop hub is sleeved with the friction plate of the overload clutch, and the friction plate is in spline fit with the outer peripheral wall.

In another implementation of this embodiment, the transmission shaft in this embodiment is a hollow shaft, an inner shaft 12 is arranged in the transmission shaft, an oil chamber 13 is formed between the inner shaft and the transmission shaft, an end portion of the oil chamber is provided with an oil inlet hole 15, the oil inlet hole is provided in the transmission shaft and communicates with an external oil path, two oil seals 14 are provided at the oil inlet hole, and an oil inlet chamber is formed by the two oil seals. The oil chamber is provided with a plurality of lubricating oil holes, which are provided in the transmission shaft, and the lubricating oil holes are opposite to places on the transmission shaft where other components are assembled. For example, the lubricating oil holes are configured to convey lubricating oil to the stop hub, the driven gear, the overload clutch, etc. The stop hub may be further provided with oil passage 52, and components such as the friction plate of the overload clutch are lubricated by means of the oil passage.

By using the transmission system for an aircraft powerplant according to the present disclosure, the driving gear transmits power to the driven gear, the driven gear and the transmission shaft do not directly transmit power, but transmit power to the stop hub by a protruding claw mechanism, the stop hub transmits power to the overload clutch, and the overload clutch is connected to the transmission shaft by a spline and transmits power to the transmission shaft by a spline. During the transmission, the overload clutch protects the transmission shaft, the driving gear and other related parts, so as to prevent an excessive reaction force returned by the transmission of the transmission shaft from damaging the parts in the entire path. The protruding claw mechanism cooperates with the disc spring to achieve the objective of vibration reduction, and the vibration reduction is achieved by the rotation speed unevenness and torque unevenness caused by the transmission of the driving gear through the cooperation of the protruding claw and a reaction force of the disc spring. When the torque increases, the protruding claw mechanism moves backward to compress a disc spring group, and the disc spring group stores potential energy, and releases the potential energy when the torque decreases, so as to adjust the torque fluctuation. When the rotation speed fluctuates, the same effect and principle are achieved.

Secondly, the driven gear transmits rotation torque to the stop hub by the protruding claw mechanism, and the stop hub is connected to an internal spline of the overload clutch by a spline. A slip force value of the internal spline is adjusted (a friction coefficient is fixed) by the magnitude of a pressing force of the disc spring (small disc spring inside the overload clutch), and the overload clutch is connected to the transmission shaft by the spline. When resistance of the transmission shaft is greater than slip torque of the overload clutch, the clutch slides to disconnect the stop hub of an output shaft to temporarily interrupt the power, so as to achieving the purpose of protecting the driving shaft and other weak parts.

Thirdly, the transmission system in this embodiment can be compatible with the transmission power of 50 to 200 horsepower and can bear a maximum torque input of 500 N.m.

Fourthly, through the design of the isolating ring, not only can the disc spring seat be limited, but also a function of impact protection can be achieved.

Fifthly, through the design of the oil chamber and the design of the lubricating oil hole, the clutch, the stop hub and the spline can undergo forced lubrication, and the clutch has higher reliability and longer service life through the forced lubrication of an oil passage.

## Claims

1. A transmission system for an aircraft powerplant, comprising a transmission shaft, wherein an input end of the transmission shaft is sleeved with a driven gear, one end of the driven gear is axially limited, and the other end of the transmission shaft is configured to connect a rotating member; an end of the driven gear is in transmission connection with a stop hub, the stop hub is in transmission connection with an overload clutch, the overload clutch is in transmission connection with the transmission shaft, an end of the overload clutch away from the stop hub abuts against one end of a disc spring member, the other end of the disc spring member is axially limited, and a force value of the overload clutch is a fixed value; and
an end face of the driven gear facing the stop hub is provided with a protruding claw A, an end of the stop hub is provided with a protruding claw B matching the protruding claw A, and the stop hub and the driven gear are in transmission through the matching between the protruding claws.

2. The transmission system for an aircraft powerplant according to claim 1, wherein the protruding claw A and the protruding claw B are provided with a same number of claw teeth, the claw teeth of the protruding claw A and the claw teeth of the protruding claw B match each other, and the protruding claw A and the protruding claw B each have 3-10 claw teeth.

3. The transmission system for an aircraft powerplant according to claim 2, wherein the claw teeth of the protruding claw A or the claw teeth of the protruding claw B each have inclined planes and a top surface, a bottom surface is provided between adjacent claw teeth, the inclined plane is a spiral section, a fillet is provided between the inclined plane and the top surface, and a fillet is provided between the inclined plane and the bottom surface.

4. The transmission system for an aircraft powerplant according to claim 3, wherein the spiral section has a helix angle of 25°-65°.

5. The transmission system for an aircraft powerplant according to claim 4, wherein each claw tooth of the protruding claw A has a height different from that of the claw tooth of the protruding claw B.

6. The transmission system for an aircraft powerplant according to claim 5, wherein a height difference between the claw teeth of the protruding claw A and the claw teeth of the protruding claw B is 0.1-3 mm.

7. The transmission system for an aircraft powerplant according to claim 6, wherein a corresponding central angle between adjacent claw teeth of the protruding claw A is greater than a central angle corresponding to the claw tooth of the protruding claw B, and a central angle between adjacent claw teeth of the protruding claw B is greater than a central angle corresponding to the claw tooth of the protruding claw A.

8. The transmission system for an aircraft powerplant according to claim 7, wherein the top surface and the inclined planes of each claw tooth of the protruding claw A and/or the protruding claw B and the bottom surface between adjacent claw teeth each have a drum-shaped size of 0.02-0.1 mm.

9. The transmission system for an aircraft powerplant according to any one of the above claims, wherein a shaft sleeve is arranged on the transmission shaft at an end of the driven gear, the shaft sleeve axially limits the driven gear, and a needle bearing is arranged between an end face of the driven gear and an end face of the shaft sleeve.

10. The transmission system for an aircraft powerplant according to any one of the above claims, wherein an end of the stop hub is provided with a flange, the protruding claw B is arranged on the flange, a spline is arranged on an outer peripheral wall of the stop hub, a friction plate of the overload clutch is in spline fit with the stop hub, an inner ring of a front end housing of the overload clutch is provided with an internal spline, and the inner ring of the front end housing is splined with the transmission shaft; a disc spring seat of the disc spring member is arranged on the transmission shaft at a front end of the overload clutch, and a disc spring is arranged in the disc spring seat; one end of the disc spring abuts against the overload clutch, and the other end thereof abuts against an inner end face of the disc spring seat.

11. The transmission system for an aircraft powerplant according to claim 10, wherein a shaft shoulder is arranged on the transmission shaft, an isolating ring is arranged at the shaft shoulder, and the isolating ring axially limits the disc spring seat of the disc spring member; and the isolating ring is in cambered surface contact with the shaft shoulder.

12. The transmission system for an aircraft powerplant according to claim 11, wherein a bearing for supporting a case is arranged between the isolating ring and the disc spring seat of the disc spring member; and a bushing is arranged between the bearing and the disc spring seat of the disc spring member.

13. The transmission system for an aircraft powerplant according to any one of the above claims, wherein the transmission shaft is a hollow shaft, an inner shaft is arranged in the transmission shaft, an oil chamber is formed between the inner shaft and the transmission shaft, the transmission shaft is provided with a lubricating oil hole communicating with the oil chamber, and the lubricating oil hole is configured to convey lubricating oil to the stop hub, the driven gear and the overload clutch.
